(19) Europäisches Patentamt

European Patent Office

Office européen des brevets

(11) **EP 0 896 481 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(51) Int Cl.:
***H04N 9/78*** *(2006.01)*

(21) Anmeldenummer: **97113484.6**

(22) Anmeldetag: **05.08.1997**

(54) **Adaptives Filter**

Adaptive filter

Filtre adaptatif

(84) Benannte Vertragsstaaten:
**DE FR GB IT NL**

(43) Veröffentlichungstag der Anmeldung:
**10.02.1999 Patentblatt 1999/06**

(73) Patentinhaber: **Micronas Semiconductor Holding AG**
**8005 Zürich (CH)**

(72) Erfinder: **Scherrer, Remy, Dipl.-Ing.**
**68330 Huningue (FR)**

(56) Entgegenhaltungen:
**EP-A- 0 616 475          WO-A-90/13978**

**Beschreibung**

Die Erfindung betrifft ein adaptives Filter für eine Verarbeitungseinrichtung von Fernsehsignalen, z.B. einen Fernsehempfänger, einen Videorekorder oder eine fernsehtaugliche Multimediaeinrichtung, die der Trennung der verschachtelt Luminanz- und Chrominanzkomponente eines Farbfernsehsignalgemisches dient. Zur Trennung werden zunehmend Filterkombinationen verwendet, die eine bessere Anpassung an bestimmte Bildeigenschaften ermöglichen als Einzelfilter. Für die Filterung sind Helligkeits- und Farbübergänge sowie gerastete Strukturen im Bildinhalt bekanntlich kritisch. Dies führt infolge der Filtereigenschaften teilweise zu sehr störenden Fehlsignalen, die sich im Bild als Farbsäume, Perlschnureffekte, "krabbelnde" Farbpunkte oder farbige Moiré-Struktur bemerkbar machen. Die Störeffekte, die die einzelnen Filter, z.B. Kämmungsfilter, Bandpässe oder Bandsperren, erzeugen, sind bekannt, sowie deren Ursachen, und man versucht daher durch eine Kombination unterschiedlicher Filter, eine möglichst störungsfreie Trennung zu erreichen. Weniger gut ist es dabei, wenn unmittelbar von einem Filter auf das andere umgeschaltet wird. Eine weiche Umschaltung über eine Steuerung der einzelnen Filteranteile ist viel besser und erzeugt weniger Übergangseffekte. Auf diese Weise lassen sich Zwischenzustände für die Filterung einstellen, bei denen die Kombinationswirkung mehrerer oder aller Filter verwendet wird, indem die einzelnen Filterbeiträge über unterschiedliche Gewichtungen zu einem einzigen Ausgangssignal zusammengefaßt werden. Die Bestimmung der einzelnen Gewichtungsfaktoren wird von einer Analysen- oder Entscheidungseinrichtung gesteuert, die den Bildinhalt im Bereich der jeweiligen Stelle nach kritischen Bildstrukturen untersucht, wobei eine Halb- oder Vollbildspeicherung außer den flächenbezogenen auch zeitliche Bildcharakteristiken erfaßt. Über diese Analysenwerte kann daher die Filterkombination adaptiv gesteuert werden. Ein Beispiel für eine derartige adaptive Filteranordnung, die auch monolithisch integrierbar ist, ist ausführlich in der PCT-Patentanmeldung WO 90/13978 beschrieben.

Ein Nachteil der bekannten adaptiven Filter ist, daß der Algorithmus für die Steuerung der Filteranteile vom Hersteller starr durch die jeweilige Schaltung oder ein entsprechendes Programm vorgegeben ist. Ein Eingriff von außen durch den Gerätehersteller oder durch den Anwender ist somit nahezu ausgeschlossen, denn das Programm erlaubt allenfalls eine geringfügige Modifikation des unübersichtlichen Algorithmus, sofern man weiß wo man eingreifen muß.

Ein weiterer Nachteil ist, daß der vorgegebene Algorithmus im wesentlichen nur für einen einzigen Betriebs- und Bildzustand optimiert ist und unterschiedlichen Bildquellen, Empfangsbedingungen und Verarbeitungseinrichtungen keine Rechnung trägt. Der Algorithmus orientiert sich im übrigen in der Regel an einschlägigen Testbildern, die dort zwar einen optimalen Eindruck erzeugen, bei realen Fernsehsignalen, die der subjektiven Betrachtung unterliegen, jedoch meist weniger günstig aussehen.

Es ist daher Aufgabe der Erfindung, die Filterfunktion eines adaptiven Filters auf möglichst einfache Weise auch nach dem Herstellungsprozeß an verschiedene Betriebsbedingungen und Bildsignale anpassen zu können.

Die Aufgabe wird nach dem kennzeichnenden Merkmal des Anspruchs 1 dadurch gelöst, daß mit der Entscheidungseinrichtung eine von außen manuell oder über Daten steuerbare Einstelleinrichtung gekoppelt ist, deren ausgangsseitig abgegebenen Einstellwerte (e1 bis e4), das Mischungsverhältnis der Filtersignale (s1 bis s4) im Mixer (5) steuern, wobei

jeder Einstellwert jeweils einem charakteristischen Bildparameter zugeordnet ist und diesen entsprechend seinem Einstellwert für die weitere Verarbeitung wichtet und

die Bildparameter richtungs- und/oder zeitabhängigen Bildgradienten entsprechen.

Die Erfindung erlaubt eine Anpassung des Filterverhaltens einer vorgegebenen Filtereinrichtung an den subjektiven Eindruck. Dies erfolgt mittels manuell einstellbaren Betätigungseinrichtungen oder über Daten, die beispielsweise mittels einer Fernbedienung oder eines programmierbaren Controllers eingegeben werden. Die mittels der Einstelleinrichtung vorgebbaren Einstellwerte sind charakteristischen Bildparametern zugeordnet, die auch von der Analyseeinrichtung erfaßt werden. Derartige Bildparameter können die Bildqualität und Bildeigenschaften erfassen, wie z.B. Rauschen, Bildstrukturen, Videofrequenzen, aber auch von welchen Quellen die Signale stammen, z.B. vom Videorekorder. Im einfachsten Fall stellen die Einstellwerte

Gewichtungsfaktoren dar, mit denen die zugehörigen Bild-Analysewerte verstärkt, abgeschwächt oder unverändert gelassen werden. Zweckmäßig hat sich hierbei erwiesen, wenn als charakteristische Bildparameter richtungs- und/oder zeitabhängige Bildgradienten verwendet werden. Denn diese Bildgradienten sind wie bereits angegeben im wesentlichen für das Fehlverhalten der einzelnen Filter verantwortlich. Beispielsweise versagt die Kämmung, wenn in vertikaler Richtung Helligkeits- und/oder Farbänderungen auftreten, insbesondere sprungförmige. In diesem Falle müßte von der Kämmung auf das Bandpaß- oder Bandsperrfilter umgeschaltet werden. Mit steilflankigen Kerbfiltern, auch Notch-Filter genannt, lassen sich schmalbandige Frequenzbereiche, z.B. die Farbhilfträgerfrequenz oder die zugehörigen Farbkomponenten, besonders gut aus einem Signalgemisch entfernen.

Die Codierung der Helligkeits- und Farbinformation in den standardisierten Fernsehsignalgemischen ermöglicht bei guten Signalen eine einfache Trennung über die bekannten Kämmungsverfahren, die zeilen- oder halbbild- oder vollbildweise erfolgen. Sowie jedoch richtungs- und/oder zeitabhängige Bildgradienten vorhanden sind, wird die Kämmung kritisch.

Da die Bildartefakte insbesondere durch vertikale, horizontale und diagonale Bildgradienten verursacht sind, erweist sich die nach der Erfindung einstellbare Gewichtung dieser charakteristischen Bildparameter über die zugeordneten Einstellwerte als sehr zweckmäßig. Die Berücksichtigung der Zeitinformation oder die Erkennung rasterförmiger Strukturen ist sehr schaltungsaufwendig. Die spezielle Auswertung dieser Bildparameter kann jedoch ohne große Nachteile auch unterbleiben, weil in der Regel diese Bildparameter nicht unabhängig von den zuvor genannten drei Richtungsgradienten sind, sondern zumindest teilweise durch sie miterfaßt sind. Um den Schaltungsaufwand gering zu halten, werden die diagonalen Bildgradienten aus der Überlagerung von mindestens zwei horizontalen Bildgradienten gebildet. Liegt in diagonaler Richtung keine Änderung der Bildstruktur vor, dann ergibt die Differenz aus zwei horizontalen Bildgradienten den Wert Null. Der Begriff "Diagonal" umfaßt dabei alle Winkel, die von den orthogonalen Bezugsrichtungen h, v einigermaßen deutlich abweichen.

Es wird darauf hingewiesen, daß die Erzeugung der Bildgradienten und die zugehörige Verarbeitungs- und Steuerungsschaltungen sowohl mit analogen als auch digitalen Schaltungen realisiert werden können. Analoge Kerbfilter, die genau auf die Farbhilfsträgerfrequenz abgestimmt sind, sind leicht realisierbar und filtern aus dem zugeführten analogen Fernsehsignalgemisch sicher den Farbhilfsträgeranteil heraus. Mittels einer Hochpaßfilterung des restlichen Signals wird dann der horizontale Bildgradient gebildet. Der vertikale Bildgradient wird gebildet, indem die momentane Signaldifferenz über zwei Zeilen oder mehr Zeilen bestimmt wird. Als analoge Verzögerungseinrichtungen eignen beispielsweise CCD-Schaltungen (= Charge Coupled Devices).

Bei einer digitalen Verarbeitung liegt das Fernsehsignalgemisch in digitalisierter Form vor. Die Bildparameter müssen nun aus den digitalisierten Werten gebildet werden, deren zeitliche Lage durch den Digitalisierungstakt vorgegeben ist. Für die Bildung der einzelnen Bildgradienten aus den einzelnen Abtastwerten müssen aber die Bezugsphasen identisch sein. Dies läßt sich leicht erreichen, wenn der Digitalisierungstakt und der Farbhilfsträger bezüglich der Phase miteinander synchronisiert sind und bezüglich der Frequenz in einem ganzzahligen Verhältnis stehen. Bei der bereits genannten WO 90/13978 ist der Systemtakt und damit der Digitalisierungstakt viermal so groß wie die Farbhilfsträgerfrequenz. In einer Bildzeile hat in diesem Fall jeder vierte Bildpunkt die gleiche Bezugsphase. Ein horizontaler Gradient kann in diesem Fall durch eine einfache Differenzbildung erzeugt werden. Wenn die Digitalisierungsfrequenz nicht mit dem Farbhilfsträger verkoppelt ist, dann muß auf andere Weise sichergestellt werden, daß die Bezugsphasen gleich sind. In dem später dargestellten Ausführungsbeispiel wird hierzu ein interpolierter Zwischenwert aus den benachbarten Abtastwerten berechnet.

Die adaptive Steuerung und die einstellbare Gewichtung darf selbstverständlich die Amplitude des gefilterten Ausgangssignals nicht ändern. Dies wird mittels eines Mixers erreicht, in dem die unterschiedlichen Ausgangssignale der einzelnen Filter gewichtet werden. Die Amplitudengleichheit wird erreicht, wenn die Summe der einzelnen Gewichtungsfaktoren den Wert 1 hat. Die Berechnung der einzelnen Steuerwerte aus der Entscheidungseinrichtung erfolgt in der Rechenmatrix, die auch als Widerstandsnetzwerk oder als Tabelle ausgebildet sein kann. Bei der exakten Berechnung der einzelnen Gewichtungsanteile ist eine Division erforderlich, die insbesondere bei der digitalen Lösung sehr umständlich ist. Mittels einer Näherung läßt sich die Division bei der analogen und digitalen Losung jedoch vermeiden.

Die Erfindung und vorteilhafte Ausgestaltungen werden nun anhand der Figuren der Zeichnung näher erläutert:

Fig. 1 zeigt als Blockschaltbild ein adaptives Filter nach der Erfindung,

Fig. 2 zeigt schematisch gespeicherte Bildpunkte in einer orthogonalen Bildpunktmatrix bei einer nichtfarbträgerverkoppelten Digitalisierung,

Fig. 3 zeigt schematisch den Bezugsphasenverlauf einer Bildzeile und die zugehörigen abgetasteten Bildpunkte und

Fig. 4 zeigt schließlich in einer räumlichen Darstellung die näherungsweise Zuordnung eines Gewichtungsfaktors zu zwei Matrixsteuerwerten.

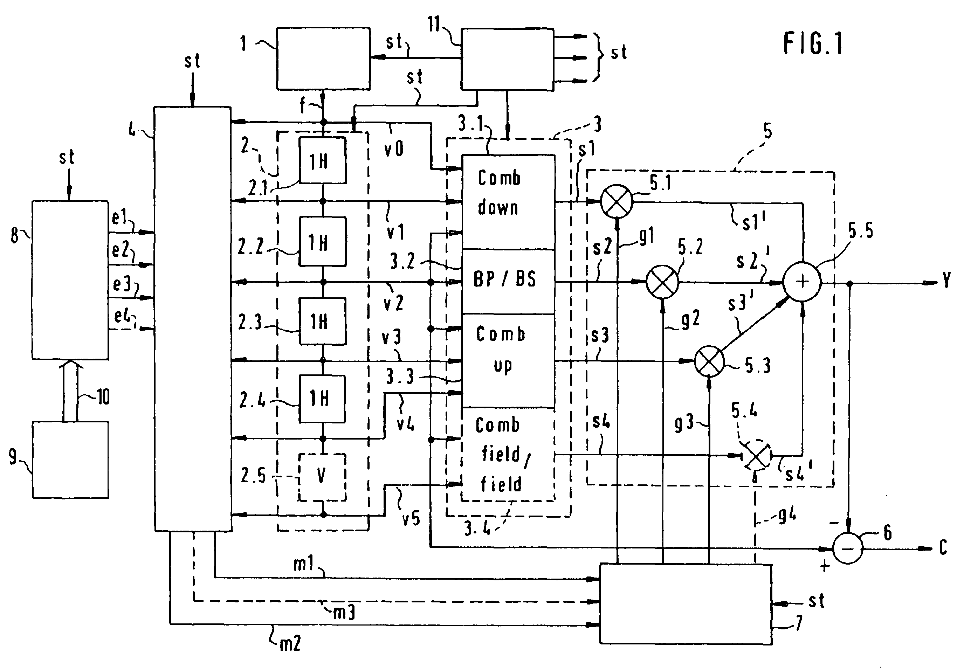

In Fig. 1 ist als Blockschaltbild ein Ausführungsbeispiel für das adaptive Filter nach der Erfindung dargestellt. Eine Quelle 1 liefert am Ausgang ein Fernsehsignalgemisch f an eine Verzögerungseinrichtung 2, die aus einer Kette von vier Verzögerern 2.1 bis 2.4 besteht, die jeweils das Fernsehsignalgemisch um eine Bildzeile verzögern. Am Ausgang der Verzögerungskette kann sich eine Verzögerungsstufe 2.5 befinden, die eine Verzögerung um ein Halbbild oder Vollbild gegenüber dem Abgriff zwischen den Stufen 2.2, 2.3 bewirkt. Den Abgriffen der Verzögerungskette 2 entsprechen die Verzögerungssignale v0 bis v5, die einer Filterkombination 3 und einer Entscheidungseinrichtung 4 zugeführt sind. Die Filterkombination 3 enthält ein Abwärtskammfilter 3.1, ein Bandpaß/Bandsperrfilter 2.2, ein Aufwärtskammfilter 3.3 und gegebenenfalls ein Halbbild- oder Vollbildkammfilter 3.4. Das Verzögerungssignal v2 entspricht einer mittleren Zeile, von der aus die Kämmung nach oben oder nach unten erfolgt. Die zu kämmenden Zeilen hängen von dem jeweiligen Farbfernsehstandard ab, bei PAL beträgt der Abstand zwei Zeilen und bei NTSC beträgt der Abstand eine Zeile. Die Halb- oder Ganzbildverzögerung V der Verzögerungsstufe 2.5 ist auf das mittlere Verzögerungssignal v2 bezogen.

Die Ausgangssignale der Filterkombination 3 sind die Filtersignale s1 bis s4, die einem Mixer 5 zugeführt sind, in dem die einzelnen Filtersignale gewichtet und danach addiert sind. Jedem der Filtersignale ist ein Multiplizierer 5.1 bis 5.4 zugeordnet, deren Ausgangssignale s1' bis s4' mittels einer Addiereinrichtung 5.5 kombiniert werden, um das gesuchte Ausgangssignal zu bilden. Im dargestellten Ausführungsbeispiel ist es das Luminanzsignal Y (=Helligkeitssignal). Soll statt dessen am Ausgang das Chrominanzsignal C (=Farbsignal) gebildet werden, dann sind in der Filterkombination 3 im wesentlichen nur einige Vorzeichen der Verzögerungssignale zu ändern und das Filter 3.2 muß ein Bandpaß für den Bereich der Farbsignale sein und keine Bandsperre wie für das Helligkeitssignal Y. Besonders einfach ist die Bildung des Chrominanzsignals C mittels eines Subtrahierers 6 aus dem mittleren Verzögerungssignal v2 und dem Luminanzsignal Y.

Die Steuerung der Multiplizierer 5.1 bis 5.4 erfolgt jeweils mittels eines Gewichtungsfaktors g1 bis g4, die in einer Rechenmatrix 7 gebildet werden. In der Rechenmatrix wird ein funktioneller Zusammenhang zwischen Matrixsteuersignalen m1 bis m3 hergestellt, die in der Entscheidungseinrichtung 4 aus der Analyse der Verzögerungssignale v0 bis v5 gebildet werden. Als Analysesignale werden aus den Verzögerungssignalen mindestens ein horizontaler Bildgradient Hdiff, ein vertikaler Bildgradient Vdiff und ein diagonaler Bildgradient Ddiff gebildet. Zur getrennten Steuerung des Abwärtskammfilters 3.1 und des Aufwärtskammfilters 3.3 wird der vertikale Gradient Vdiff als ein unterer vertikaler Bildgradient Vdiffdn und ein oberer vertikaler Bildgradient Vdiffup gebildet, wobei die Gradientenberechnung von dem mittleren Verzögerungssignal v2 ausgeht. Mit diesen beiden Gradienten wird bestimmt, ob die Bildänderung mehr unterhalb oder mehr oberhalb der mittleren Bildzeile liegt, oder ob überhaupt eine vertikale Bildänderung vorhanden ist. Wenn man sich in der Entscheidungseinrichtung 4 bei der Bildung der Bildgradienten auf die drei Analyserichtungen vertikal, horizontal und diagonal beschränkt, dann lassen sich mit zwei geeigneten Matrixsteuerwerten m1, m2 eindeutig drei Gewichtungsfaktoren g1, g2, g3 mittels einer dreidimensionalen Rechenmatrix 7 bestimmen. Der erste Gewichtungsfaktor g1 ist dann dem Abwärtskammfilter 3.1, der zweite Gewichtungsfaktor g2 dem Bandpaß/Bandsperrfilter 3.2 und der dritte Gewichtungsfaktor g3 dem Aufwärtskammfilter 3.3 zugeordnet. Das Halb/Vollbildkammfilter 3.4 tritt hierbei nicht in Funktion. Ein geeigneter Matrixsteuerwert m1 läßt sich beispielsweise über die einzelnen Analyse-Bildgradienten und Einstellwerte e1, e2, e3 wie folgt bilden:

$$m1 = (e1 \times Vdiffdn - \{ e2 \times Hdiff - e3 \times Ddiff \}) / (K + e2 \times Hdiff),$$

wobei die Differenz in der geschweiften Klammer im Zähler für negative Differenzen auf den Wert 0 begrenzt wird und "K" ein von der Amplitude des Farbfernsehsignalgemisches f abhängiger Koeffizient ist, dessen Wert zwischen 0 und 1 liegt.

Auf ähnliche Weise wird der zweite Matrixsteuerwert m2 gebildet, nämlich indem statt des unteren vertikalen Gradienten Vdiffdn der obere vertikale Gradient Vdiffup in die obige Formel eingesetzt wird. Die Bedeutung der beiden Matrixsteuersignale m1, m2 ist dahingehend zu verstehen, daß mit dem jeweiligen Matrixsteuerwert der Anteil des Bandpaß/Bandsperrfilters 3.2 am gefilterten Ausgangssignal bestimmt wird. Der erste Matrixsteuerwert m1 enthält den unteren vertikalen Bildgradienten Vdiffdn und der zweite Matrixsteuerwert m2 den oberen vertikalen Bildgradienten Vdiffup. Über eine Transormationsformel in der Rechenmatrix 7 werden aus den beiden Matrixsteuerwerten m1, m2 die drei Gewichtungsfaktoren g1 bis g3 gebildet.

Der Grundgedanke, der hinter den beiden Matrixsteuerwerten m1, m2 liegt, soll im folgenden erläutert werden. Wenn durch m1 oder m2 wertemäßig der Anteil an nichtgekämmten Signalen bestimmt werden soll, dann soll dieser groß sein, wenn die vertikale Differenz Vdiff ebenfalls groß ist. Wenn eine horizontalen Differenz Hdiff vorliegt, dann spricht dies gegen den Bandpaß oder die Bandsperre, weshalb dieser Gradient das Kämmen eher begünstigen soll. Sind die horizontalen Bildänderungen jedoch von diagonalen Bildänderungen Ddiff begleitet, dann entstehen durch die Kämmung besonders unangenehme Störungen, was zur Folge hat, daß der Kämmvorgang eher etwas zurückgenommen werden soll. Damit große diagonale Gradienten bei kleinen horizontalen Gradienten durch die Differenzbildung nicht noch das Kämmverhalten verstärken, darf der Inhalt der geschweiften Klammer niemals negativ werden, sondern wird dann auf den Wert Null geklemmt. Bei kleinen Amplituden des Fernsehsignalgemisches ist davon auszugehen, daß die etwa konstante Rauschamplitude groß gegenüber dem Nutzsignal ist. Kämmen wäre daher ungünstig, weil das Signalrauschverhältnis durch die Differenzbildung beim Kämmen weiter verschlechtert wird. Durch den von der Amplitude abhängigen Koeffizienten K wird der Matrixsteuerwert m1, m2 von der jeweiligen Amplitude unabhängig gemacht, also gleichsam normiert. Es ist einsichtig, daß ohne diese Normierung der vertikale Gradient Vdiff direkt von der Amplitude abhängig ist und damit genau in falscher Richtung auf das Kämmungsverhalten einwirken würde. Der Nenner enthält ferner als eine additive Komponente noch den horizontalen Bildgradient Hdiff, der mit steigendem Wert - wie schon beim Zähler - die Kämmung unterstutzen soll.

In Fig. 1 ist zur Bildung der Einstellwerte e1 bis e4 schematisch eine Einstelleinrichtung 8 dargestellt, die entweder manuelle Einstellmittel wie Potentiometer, Tasten, Kippschalter usw. enthält oder eine Speichereinrichtung für digitale Daten, die von einem zentralen Controller 9 über einen Steuerbus 10 der Einstelleinrichtung 8 zugeführt sind. Der zentrale Controller 9 ist für den Gerätehersteller zugänglich aber auch für den Benutzer des ganzen Gerätes, beispielsweise über ein Tastenfeld oder eine Fernbedienungseinrichtung. Schließlich enthält Fig. 1 noch eine Steuereinrichtung 11, die mittels Steuersignalen st die einzelnen Stufen steuert, z.B. auch die erforderlichen Umschaltungen für PAL, NTSC usw.

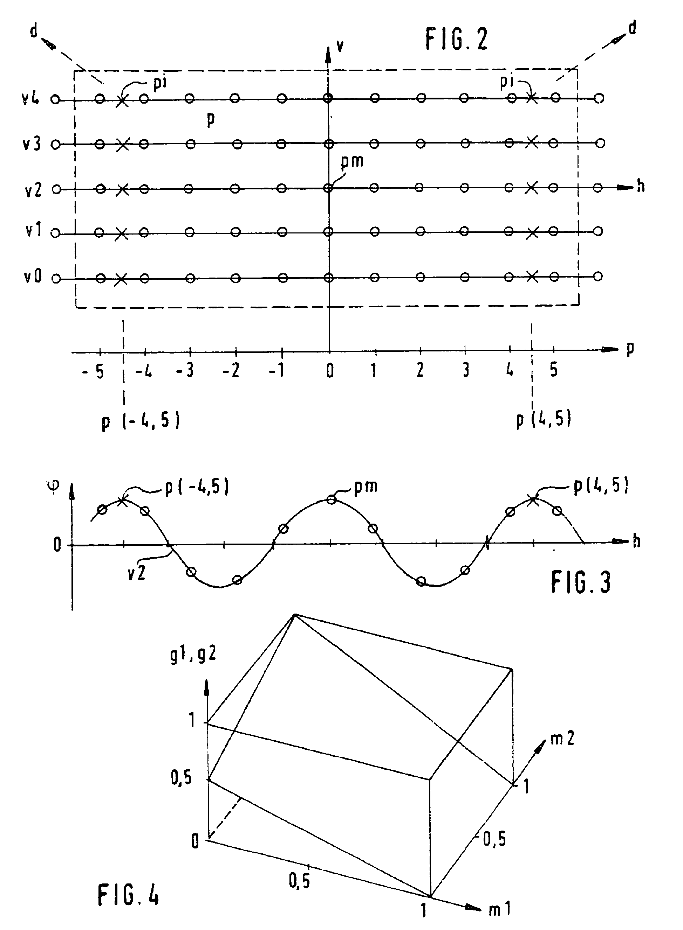

In Fig. 2 ist ein möglichst orthogonales Array aus gespeicherten Bildpunkten p dargestellt, die entsprechend dem Fernsehbildschirm in einem horizontalen/vertikalen Bildraster h, v dargestellt sind. In der Mitte befindet sich der mittlere Bildpunkt pm, dessen Signalkomponenten durch die adaptive Filtereinrichtung getrennt werden sollen. Als Beispiel ist ein PAL-Signal angenommen, das mit einem Takt von 20,25 MHz digitalisiert ist. Die Bezugsphasen der gespeicherten Bildpunkte p stimmen nicht überein, so daß für die Differenzbildung interpolierte Bildpunkte pi beim Pixelwert p = 4,5 und p = -4,5 verwendet werden müssen. Diese interpolierten Bildpunkte sind in Fig. 2 mittels eines liegenden Kreuzes dargestellt. In der darunterliegenden Fig. 3 ist für das mittlere Verzögerungssignal v2 der Verlauf der Bezugsphase $\varphi$ in horizontaler Richtung h dargestellt. Der sinusförmige Verlauf des Verzögerungssignals v2 zeigt, daß eine lineare Interpolation nicht optimal ist, sondern die Sinuskurve durch eine geeignete Interpolation angenähert werden muß. Die Lage der einzelnen Bildpunkte p auf der Kurve ist zeitlich von der Digitalisierungsfrequenz abhängig. Der absolute Interpolationszeitpunkt liegt durch die Farbhilfsträgerperiode fest. Der relative Interpolationszeitpunkt zu den jeweils vorhandenen Nachbarwerten ist jedoch von der Digitalisierungsfrequenz abhängig.

In Fig. 4 ist schließlich in einer räumlichen Darstellung der näherungsweise Funktionsverlauf der Transformation in der Rechenmatrix 7 dargestellt. Die eigentliche Funktion, die den Kämmungsanteil aus dem ersten und zweiten Matrixsteuerwert m1, m2 bestimmt, hat folgendes Aussehen:

$$g1, g3 = (1 - m1) / ((1 - m1) + (1 - m2) + m1 \times m2).$$

Die Funktion ist bezüglich der Matrixsteuerwerte m1, m2 symmetrisch aufgebaut, so daß durch einfaches Vertauschen dieser Werte der Gewichtungsfaktor g1, g3 für die untere und obere Kämmung erhalten wird. Der Gewichtungsfaktor g2 für das Standardfilter, also das Filter 3.2, wird entsprechend der angegebenen Transformationsgleichung durch die Multiplikation des ersten und zweiten Matrixsteuerwerts m1, m2 erhalten. Da die Transformationsgleichung eine Quotientenbildung enthält, wird sie zweckmäßigerweise durch eine Näherungsfunktion ersetzt, die in Fig. 4 schematisch dargestellt ist. Ein gutes Beispiel für eine Näherungsfunktion zeigt die nachfolgende Gleichung für die Gewichtungsfaktoren g1 und g3, die nur lineare Beziehungen enthält:

$$g1, g3 = (1 - m1 + m2 - m1 \times m2) / 2.$$

Liegen die Gewichtungsfaktoren g1, g3 für die beiden Kammfilter 3.1, 3.3 aus bestimmten Gründen schon fest oder sind bereits berechnet, dann kann durch eine einfache Vertauschung der Matrixsteuerwerte m1, m2 mit den Gewichtungsfaktoren g1, g3 der noch unbekannte Gewichtungsfaktor g2 für das Bandpass/Bandsperrfilter 3.2 bestimmt werden. Die Wahl der zwei Eingangsvariablen zur Ermittlung der unbekannten dritten Größe hängt wie bei der zuvor angegebenen exakten Transformationsgleichung nur davon ab, welche der drei Größen für die weitere Berechnung schon zur Verfügung stehen. Im Ausführungsbeispiel von Fig. 1 sind dies die beiden "Gewichtungsfaktoren" (= Matrixsteuerwerte) m1, m2, die für zwei unabhängige - tatsächlich jedoch nicht vorhandene - Bandpass/Bandsperrfilter angegeben sind, wobei einmal der untere und einmal der obere vertikale Bildgradient Vdiffdn bzw. Vdiffup in den zugehörigen Gewichtungsfaktor m1, m2 mit eingeht. Aus den erhaltenen Werten m1, m2 wird unter erneuter Berücksichtigung des unteren vertikalen Bildgradienten Vdiffdn der untere Kämmungsfaktor (= Gewichtungsfaktor g1) und unter Berücksichtigung des oberen vertikalen Bildgradienten Vdiffup der obere Kämmungsfaktor (=Gewichtungsfaktor g3) gebildet. Aus den beiden Gewichtungsfaktoren g1, g3 wird schließlich der noch unbekannte Gewichtungsfaktor g2 für das tatsächlich vorhandene Bandpass/Bandsperrfilter 3.2 gebildet.

Es wird darauf hingewiesen, daß auch andere Transformationsfunktionen , auch nichtlineare, verwendet werden können. Dann ist eine mathematische Vertauschung der Variablen und Abhängigen jedoch nicht mehr möglich. Für die eigentliche Bestimmung der Gewichtungsfaktoren liegen die Transformationsfunktionen jedoch als Schaltung oder als Programm fest vor, so daß die mathematische Betrachtungsweise, die lediglich der grundsätzlichen Erläuterung der Transformation dient, für die eigentliche Verarbeitung ohne Bedeutung ist.

**Patentansprüche**

1. Adaptives Filter mit
   einer Quelle (1) für ein Fernsehsignalgemisch (f),
   einer Verzögerungseinrichtung (2) zur Bildung von Verzögerungssignalen (v0 bis v5) aus dem Fernsehsignalgemisch,
   einer Filterkombination (3), die aus den Verzögerungssignalen Filtersignale (s1 bis s4) bildet und mindestens eine Aufwärts- und eine Abwärtskämmeinrichtung (3.4, 3.1) enthält,
   einem Mixer (5), der eingangsseitig mit der Filterkombination (3) gekoppelt ist und an dessen Ausgang ein gefiltertes Signal (Y) abgreifbar ist,
   einer Entscheidungseinrichtung (4) zur Analyse der Verzögerungssignale (v0 bis v5) und zur Bildung von Matrixsteuerwerten (m1, m2, m3) und
   einer Rechenmatrix (7), die aus den Matrixsteuerwerten Gewichtungsfaktoren ($g^1$ bis $g^4$) für den Mixer (5) bildet, **dadurch gekennzeichnet, daß**

   - mit der Entscheidungseinrichtung (4) eine von außen manuell oder über Daten steuerbare Einstelleinrichtung (8) gekoppelt ist, deren ausgangsseitig abgegebenen Einstellwerte (e1 bis e4), das Mischungsverhältnis der Filtersignale (s1 bis s4) im Mixer (5) steuern, wobei
   - jeder Einstellwert jeweils einem charakteristischen Bildparameter zugeordnet ist und diesen entsprechend seinem Einstellwert für die weitere Verarbeitung wichtet und
   - die Bildparameter richtungs- und/oder zeitabhängigen Bildgradienten entsprechen.

2. Adaptives Filter nach Anspruch 1, **dadurch gekennzeichnet, daß** die Bildgradienten mindestens einer horizontalen, einer vertikalen und einer diagonalen Bildrichtung (h, v, d) zugeordnet sind.

3. Adaptives Filter nach Anspruch 1 oder 2, **dadurch gekennzeichnet, daß** die Entscheidungseinrichtung (4) derart ausgestaltet ist, daß die Analyse-Bildgradienten aus den Verzögerungssignalen (v0 bis v5) bestimmt sind.

4. Adaptives Filter nach Anspruch 3, **dadurch gekennzeichnet, daß** die Analyse-Bildgradienten (Hdiff, Vdiffdn, Vdiffup, Ddiff) mindestens in horizontaler, vertikaler und diagonaler Bildrichtung (h, v, d) bestimmt sind.

5. Adaptives Filter nach Anspruch 4, **dadurch gekennzeichnet, daß** zur Bildung des Analyse-Bildgradienten (Ddiff) in diagonaler Richtung (d) die Differenz aus mindestens zwei horizontalen Analyse-Bildgradienten (Hdiff) gebildet ist.

6. Adaptives Filter nach einem der Ansprüche 3 bis 5, **dadurch gekennzeichnet, daß** bei einem digitalisierten Fernsehsignalgemisch (f) in der Entscheidungseinrichtung (4) die Bildpunkte (p, pm) einer gespeicherten Bildpunktmatrix zur Bildung der Analyse-Bildgradienten verwendet sind.

7. Adaptives Filter nach Anspruch 6, **dadurch gekennzeichnet, daß** die Bildpunktmarix die Bildpunkte (p, pm) von fünf benachbarten Bildzeilen umfaßt, wobei sich der gespeicherte Bereich der Bildpunkte in horizontaler (h) und vertikaler (v) Richtung jeweils symmetrisch um einen mittleren Bildpunkt (pm) erstreckt.

8. Adaptives Filter nach Anspruch 7, **dadurch gekennzeichnet, daß** zur Bildung der Analyse-Bildgradienten nur die Bildpunkte (p, pm) mit gleicher Bezugsphasenlage miteinander verrechnet werden oder daß mittels eines Filters oder mittels eines Quadraturdemodulators vor der Speicherung der Bildpunkte (p, pm) deren störende Komponente unterdrückt ist.

9. Adaptives Filter nach Anspruch 8, **dadurch gekennzeichnet, daß** zur Bildung der Analyse-Bildgradienten auch interpolierte Bildpunkte (pi) verwendet werden, die mittels einer Interpolation aus den gespeicherten Bildpunkten (p, pm) berechnet sind, wobei durch die Wahl des Interpolationszeitpunktes die geforderte gleiche Bezugsphasenlage hergestellt ist.

10. Adaptives Filter nach einem der Ansprüche 1 bis 9, **dadurch gekennzeichnet, daß** in der Rechenmatrix (7) die Gewichtungsfaktoren (g1, g2, g3) mittels einer Näherungsformel bestimmt sind.

**Claims**

1. An adaptive filter comprising
   a source (1) for a composite video signal (f),
   a delay device (2) for forming delay signals (v0 to v5) from the composite video signal,
   a filter combination (3) for forming filter signals (s1 to s4) from the delay signals comprising at least one comb-up device and one comb-down device (3.4, 3.1),
   a mixer (5) coupled to the filter combination (3) at its input end and providing a filtered signal (Y) at its output,
   a decision device (4) for analyzing the delay signals (v0 to v5) and for forming matrix control values (m1, m2, m3), and
   a computing matrix (7) for transforming the matrix control values into weighting factors (g1 to g3) for the mixer (5),
   **characterized in that**
   the decision device (4) has a manually controllable or data-controllable setting device (8) coupled thereto whose output values (e1 to e4) control the mixing ratio of the filter signals (s1 to s4), with

   - each output value assigned to a characteristic image parameter and weighting the latter for the subsequent processing in accordance with its value, and
   - the image parameters corresponding to direction- and/or time-dependent image gradients.

2. An adaptive filter as claimed in claim 1, **characterized in that** the image gradients are assigned at least to a horizontal, a vertical, and a diagonal image direction (h, v, d).

3. An adaptive filter as claimed in claim 1 or 2, **characterized in that** the decision device (4) is so designed that the analysis image gradients are determined from the delay signals (v0 to v5).

4. An adaptive filter as claimed in claim 3, **characterized in that** the analysis image gradients (Hdiff, Vdiffdn, Vdiffup, Ddiff) are determined at least in the horizontal, vertical, and diagonal image directions (h, v, d).

5. An adaptive filter as claimed in claim 4, **characterized in that** for the formation of the analysis image gradient (Ddiff) in the diagonal direction (d), the difference of at least two horizontal analysis image gradients (Hdiff) is formed.

6. An adaptive filter as claimed in any one of claims 3 to 5, **characterized in that** in the case of a digitized composite video signal (f), the picture elements (p, pm) of a stored picture-element matrix are used in the decision device (4) for forming the analysis image gradients.

7. An adaptive filter as claimed in claim 6, **characterized in that** the picture-element matrix comprises the picture elements (p, pm) of five adjacent picture lines, with the stored regions of the picture elements in the horizontal (h) and vertical (v) directions each being symmetrical about a central picture element (pm).

8. An adaptive filter as claimed in claim 7, **characterized in that** for the formation of the analysis image gradients, only the picture elements (p, pm) with the same reference phase are used or that prior to the storage of the picture elements (p, pm), their spurious component is suppressed by means of a filter or a quadrature demodulator.

9. An adaptive filter as claimed in claim 8, **characterized in that** for the formation of the analysis image gradients, use is also made of interpolated picture elements (pi) which are calculated from the stored picture elements (p, pm) by interpolation, with the required equal reference phase relation being established by suitable choice of the interpolating instant.

10. An adaptive filter as claimed in any one of claims 1 to 9, **characterized in that** the weighting factors (g1, g2, g3) are determined in the computing matrix (7) by means of an approximation formula.

**Revendications**

1. Filtre adaptatif comportant :

   -- une source (1) de signal composite de télévision (f),
   -- un générateur de retard (2) pour former une pluralité de signaux de retard (v0 à v5) sur la base du signal composite de télévision,

-- une combinaison de filtres (3), qui produit des signaux de filtrage (s1 à s4) sur la base des signaux de retard et qui comporte au moins un filtre en peigne haut et un filtre en peigne bas (3.4, 3.1),

-- un mélangeur (5) qui est couplé en entrée avec la combinaison de filtres (3) et qui permet de mesurer à sa sortie un signal de filtrage (Y),

-- un circuit de décision (4) pour analyser les signaux de retard (v0 à v5) et pour former des valeurs matricielles de commande (m1, m2 et m3) et

-- une matrice de calcul (7) qui produit des facteurs de pondération sur la base des valeurs matricielles de commande pour le mélangeur (5),

**caractérisé en ce que**

-- un dispositif de réglage (8) commandable par des données extérieures saisies manuellement ou par des données de commande est couplé au circuit de décision (4) et dont les valeurs de réglage produites en sortie (e1 à e4), commandent le comportement en mélange des signaux de filtrage (s1 à s4) dans le mélangeur (5), de sorte que :

* chaque valeur de réglage est assignée à un paramètre d'image caractéristique respectif et pondère le dit paramètre d'image pour son traitement ultérieur et
* les paramètres d'image correspondent à des gradients d'image directionnels et/ou temporels.

2. Filtre adaptatif selon la revendication 1, **caractérisé en ce que** les gradients d'image sont associés à au moins une direction d'image horizontale, verticale et/ou diagonale (h, v, d).

3. Filtre adaptatif selon la revendication 1 ou 2, **caractérisé en ce que** le circuit de décision (4) est configuré de sorte que l'analyse des gradients d'image est déterminée sur la base des signaux de retard (v0 à v5).

4. Filtre adaptatif selon la revendication 3, **caractérisé en ce que** les gradients d'analyse d'image (Hdiff, Vdiffdn, Vdiffup, Ddiff) sont déterminés au moins dans les directions d'image horizontale, verticale et diagonale.

5. Filtre adaptatif selon la revendication 4, **caractérisé en ce que** pour déterminer les gradients d'analyse d'image (Ddiff) dans la direction diagonale (d), on forme la différence entre au moins deux gradients d'analyse d'image horizontaux (Hdiff).

6. Filtre adaptatif selon l'une quelconque des revendication 3 à 5, **caractérisé en ce que** des points d'image (p, pm) d'une matrice de points d'image mémorisés pour former des gradients d'analyse d'image sont utilisés dans le circuit de décision (4) au moyen d'un signal de télévision composite numérisé (f).

7. Filtre adaptatif selon la revendication 6, **caractérisé en ce que** la matrice de points d'images comporte les points d'image (p, pm) de cinq lignes d'image voisines, de sorte que les régions mémorisées des points d'image dans les directions horizontale (h) et verticale (v) respectivement s'étendent symétriquement de part et d'autre d'un point central (pm).

8. Filtre adaptatif selon la revendication 7, **caractérisé en ce que** seuls les points d'image (p, pm) ayant le même retard de phase de référence sont utilisés pour la formation des gradients d'analyse d'image, ou **en ce que** avant la mémorisation des points d'image (p, pm) on supprime leur fausse composante au moyen d'un filtre ou au moyen d'un démodulateur en quadrature.

9. Filtre adaptatif selon la revendication 8, **caractérisé en ce que** pour la formation des gradients d'analyse d'image, on utilise aussi des points d'image interpolés (pi), qui sont calculés au moyen d'une interpolation sur les points d'image mémorisés (p, pm) de sorte que le choix des points d'interpolation est élaboré sur la base d'un choix des instants d'interpolation respectant l'égalité des retards de phase de référence exigée.

10. Filtre adaptatif selon l'une des revendications 1 à 9, **caractérisé en ce que** les facteurs de pondération (g1, g2, g3) de la matrice de calcul (7) sont déterminés au moyen d'une relation d'approximation.

FIG.1

FIG. 2

FIG. 3

FIG. 4